(19) Europäisches Patentamt / European Patent Office / Office européen des brevets

(11) **EP 1 999 525 B1**

(12) **FASCICULE DE BREVET EUROPEEN**

(45) Date de publication et mention
de la délivrance du brevet:
**02.09.2009 Bulletin 2009/36**

(51) Int Cl.:
***G05B 19/416*** (2006.01)

(21) Numéro de dépôt: **07727343.1**

(22) Date de dépôt: **26.03.2007**

(86) Numéro de dépôt international:
**PCT/EP2007/052870**

(87) Numéro de publication internationale:
**WO 2007/110408 (04.10.2007 Gazette 2007/40)**

(54) **PROCEDE POUR L'ASSEMBLAGE PAR RIVETAGE DE TOLES**

MONTAGEVERFAHREN MITTELS PLATTENNIETUNG

ASSEMBLY METHOD USING PLATE RIVETING

(84) Etats contractants désignés:
**AT BE BG CH CY CZ DE DK EE ES FI FR GB GR
HU IE IS IT LI LT LU LV MC MT NL PL PT RO SE
SI SK TR**

(30) Priorité: **27.03.2006 BE 200600188**

(43) Date de publication de la demande:
**10.12.2008 Bulletin 2008/50**

(73) Titulaire: **Sonaca S.A.
6041 Gosselies (BE)**

(72) Inventeur: **HARDOUIN-FINEZ, Maxime
F-59770 Marly (FR)**

(74) Mandataire: **Ilgart, Jean-Christophe
BREVALEX
3, rue du Docteur Lancereaux
75008 Paris (FR)**

(56) Documents cités:
**EP-A- 1 457 851        WO-A-20/06013450
GB-A- 1 293 759        US-A- 4 745 557
US-A1- 2004 055 173**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### DOMAINE TECHNIQUE

La présente invention se rapporte de façon générale au domaine de l'assemblage par rivetage de tôles ou structures métalliques minces, cette technique étant largement répandue dans les activités de constructions aéronautiques.

L'invention trouve en effet une application privilégiée mais non limitative dans le domaine de l'assemblage robotisé par rivetage de tôles d'aéronefs présentant une surface de perçage/rivetage de forte courbure, comme par exemple le bord d'attaque d'une voilure, ou bien de plus faible courbure, comme un panneau de fuselage d'aéronef.

### ETAT DE LA TECHNIQUE ANTERIEURE

Dans l'art antérieur, illustré par exemple par le document US-A-4 745 557, les procédés d'assemblage par rivetage de tôles sont habituellement mis en oeuvre en opérant successivement une étape de perçage d'un trou à travers les tôles à assembler, puis une étape de mise en place d'un rivet dans le trou percé, cette combinaison d'étapes pouvant être réitérée autant de fois que nécessaire en différents points sur les tôles.

Ce type de procédé, qui peut éventuellement être réalisé à l'aide d'un unique outillage incorporant à la fois un système de perçage et un système de rivetage, ne s'est jusqu'à lors jamais montré entièrement satisfaisant en ce qui concerne la qualité des trous et/ou des fraisures obtenues, notamment dans le domaine de l'assemblage de tôles constitutives d'un bord d'attaque d'une voilure d'aéronef. A cet égard, il est à noter que ces fraisures sont généralement prévues pour loger la tête du rivet situé dans son trou correspondant.

En effet, quel que soit le type d'outillage employé, il a été constaté que la mise en oeuvre de ces procédés d'assemblage ne permettait clairement pas de garantir la formation d'un trou parfaitement circulaire et/ou d'une fraisure régulière sur les tôles à assembler.

### EXPOSÉ DE L'INVENTION

L'invention a donc pour but de proposer un procédé pour l'assemblage par rivetage de tôles remédiant aux problèmes mentionnés ci-dessus, et relatifs aux réalisations de l'art antérieur.

Ceci est réalisé grâce à l'object de la revendication 1 jointe en annexe.

Ainsi, en prenant en compte une information sur la raideur locale des tôles pour commander l'opération de perçage d'un trou, qui de façon conventionnelle mais non limitative comprend la réalisation de ce trou ainsi que préférentiellement celle d'une fraisure destinée au logement de la tête de rivet, il est alors avantageusement possible de garantir la formation d'un trou parfaitement circulaire et d'une fraisure régulière à une extrémité de ce dernier. Effectivement, la correction des consignes de vitesse d'avance et de vitesse de rotation de l'outil en fonction de la raideur des tôles au point particulier où s'effectue ultérieurement le perçage atténue considérablement, voire éradique complètement les problèmes rencontrés dans l'art antérieur, tels que l'ovalisation du trou, le délaminage du composite, les bavures en forme de cratère à la sortie du trou, ou encore l'obtention d'une surface rugueuse non désirée. En effet, les consignes précitées, sont corrigée avec l'information locale sur la raideur, déterminée grâce à une opération de clamage, de manière à ce que la poussée engendrée par l'outil sur les tôles durant le perçage ne provoque pas une rupture de contact entre le système de presse-tôles et ces mêmes tôles.

De préférence, l'étape de détermination d'une information sur la raideur locale des tôles Info_raideur au niveau du trou à percer s'effectue en réalisant une opération de clamage visant à enfoncer un système de presse-tôles dans les tôles au niveau du trou à percer sur une distance de clamage D_clamage atteignant une valeur finale D_clamage_finale en fin d'opération de clamage, opération durant laquelle on détermine périodiquement la valeur d'une force de résistance des tôles au clamage F2 résultant de l'enfoncement du système de presse-tôles dans les tôles, afin de déterminer une valeur de force de résistance des tôles en fin de clamage F2_finale, à la fin de l'opération de clamage. Il est noté que la réactualisation de la valeur de cette force F2 durant l'opération de clamage, permettant notamment d'effectuer un suivi de l'évolution de celle-ci, peut par exemple se faire toutes les 5 ms.

Par ailleurs, le fait de suivre également précisément la distance de déplacement du système de presse-tôles pendant l'opération de clamage, dite distance de clamage, D_clamage, permet grâce à la valeur finale D_clamage_finale de connaître la position réelle des tôles contraintes en fin d'opération de clamage, et donc de réaliser une fraisure disposant exactement de la profondeur désirée.

De préférence, la détermination de la valeur de la force de résistance des tôles au clamage F2 s'effectue en déterminant la valeur de la puissance moteur absorbée P2_absorbée par le système de presse-tôles s'enfonçant dans les tôles, cette valeur de la puissance moteur absorbée P2_absorbée étant ensuite convertie par un convertisseur afin d'obtenir la valeur de la force de résistance des tôles au clamage F2.

Préférentiellement, l'opération de clamage est achevée lorsque la force de résistance des tôles au clamage F2 déterminée a atteint une valeur cible F2_cible ou lorsque la distance de clamage D_clamage a atteint une valeur cible D_clamage_cible.

Toujours de manière préférentielle, l'étape dé détermination d'une information sur la raideur locale des tôles Info_raideur au niveau du trou à percer s'effectue en réalisant en outre, antérieurement à la mise en oeuvre de l'opération de clamage, une opération d'accostage du système de presse-tôles sur les tôles au niveau du trou à percer, opération durant laquelle on détermine périodiquement la valeur d'une force de résistance des tôles à l'accostage F1 résultant de l'enfoncement du système de presse-tôles dans les tôles, afin de déterminer une valeur de force de résistance des tôles en fin d'accostage F1_finale, à la fin de l'opération d'accostage.

Dans un tel cas, on prévoit alors que l'opération de clamage est débutée avec le système de presse-tôles se trouvant dans une position telle qu'occupée en fin d'opération d'accostage, en marquant un temps d'arrêt entre les deux opérations successives.

De préférence, l'information sur la raideur locale des tôles Info_raideur est obtenue en faisant le rapport entre d'une part la différence entre la valeur de la force de résistance des tôles en fin de clamage F2_finale et la valeur de la force de résistance des tôles en fin d'accostage F1_finale, et d'autre part la valeur finale de la distance de clamage D_clamage_finale. Néanmoins, il est noté que cette information pourrait être alternativement obtenue en faisant le rapport entre la valeur de la force de résistance des tôles en fin de clamage F2_finale et la valeur finale de la distance de clamage D_clamage_finale, sans sortir du cadre de l'invention.

Par ailleurs, on prévoit aussi préférentiellement que les consigne de vitesse d'avance et consigne de vitesse de rotation de l'outil sont également fonction de la nature du matériau des tôles à assembler, et du type d'outil de perçage employé.

Toujours de manière préférentielle, durant l'étape de perçage dru trou, on détermine périodiquement la valeur d'une force de résistance des tôles F3 résultant de l'appui du système de presse-tôles sur les tôles, et on compare cette dernière à une valeur minimale F3_min de manière à ordonner une diminution de la consigne de vitesse d'avance de l'outil de perçage lorsque l'on détecte que la valeur de cette force de résistance des tôles F3 est inférieure à ladite valeur minimale F3_min, par exemple fixée à 5 N.

Ainsi, cette sécurité supplémentaire, ajoutée à celle résultant de la prédisposition des vitesses de rotation et d'avance de l'outil en fonction de l'information sur la raideur locale, permet de brider le moteur d'avance de l'outil afin d'éviter que la poussée de cet outil n'entraîne une rupture du contact entre la tête de presse-tôles et les tôles à assembler.

D'autres avantages et caractéristiques de l'invention apparaîtront dans la description détaillée non limitative ci-dessous.

## BRÈVE DESCRIPTION DES DESSINS

Cette description sera faite au regard des dessins annexés parmi lesquels ;

- la figure 1 représente une vue partielle en perspective d'un dispositif pour l'assemblage par rivetage de tôles, destiné à la mise en oeuvre d'un procédé d'assemblage par rivetage selon un mode de réalisation préféré de la présente invention ;
- la figure 2 représente une vue éclatée en perspective du dispositif montré sur la figure 1 ;
- les figure 3 à 5 représentent des vues schématiques de différentes parties d'un système de commande selon un mode de réalisation préféré de la présente invention, ce système équipant le dispositif montré sur les figures 1 et 2 ; et
- les figures 6a à 6c montrent une partie du dispositif des figures 1 et 2 à différents stades lors de la mise en oeuvre du procédé d'assemblage par rivetage selon ledit mode de réalisation préféré de la présente invention, et plus particulièrement lors de l'étape de détermination d'une information sur la raideur locale des tôles au niveau dudit trou à percer.

## EXPOSE DETAILLE DE MODES DE REALISATION PREFERES

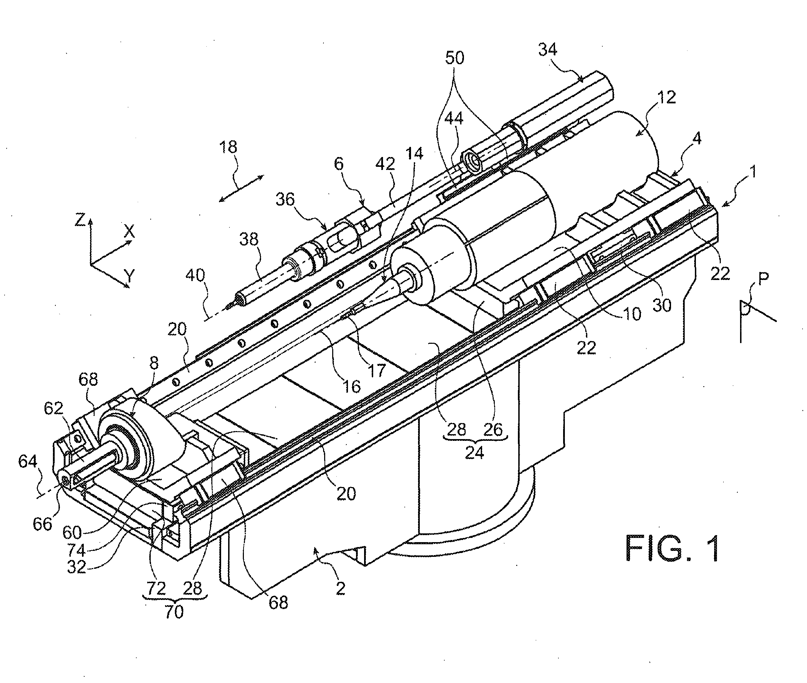

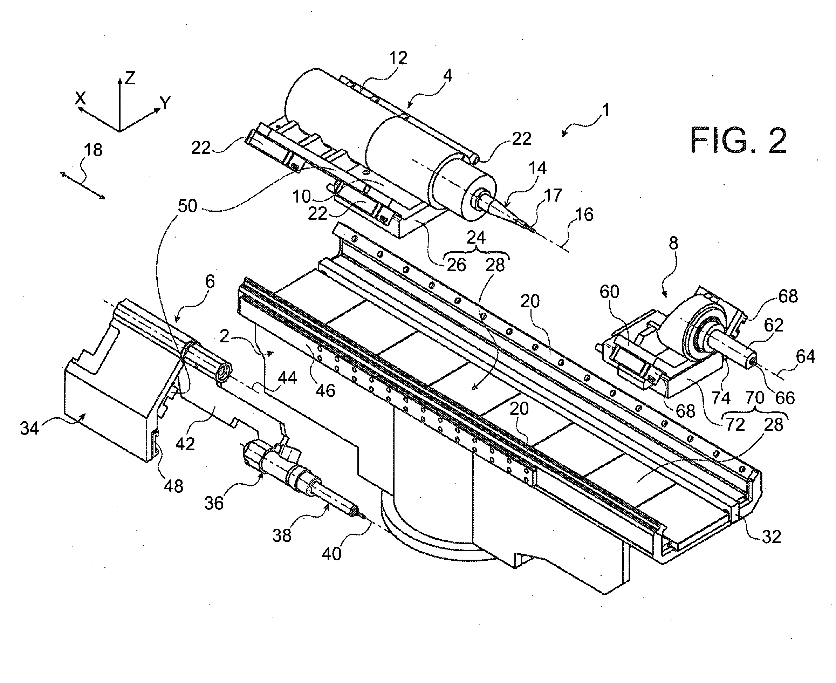

En référence tout d'abord conjointement aux figures 1 et 2, on voit une partie d'un dispositif 1 pour l'assemblage par rivetage de tôles, du type métallique ou réalisé en tout autre matériau tel qu'en matériau composite, ce dispositif 1 étant destiné à la mise en oeuvre d'un procédé d'assemblage par rivetage selon un mode de réalisation préféré de la présente invention. Naturellement, ce dispositif 1 n'est décrit qu'à titre indicatif, et il doit bien entendu être compris que le procédé d'assemblage par rivetage peut être mis en oeuvre avec tout autre type de dispositif.

Le procédé selon l'invention, qui trouve une application privilégiée dans le domaine des constructions aéronautiques, peut être adapté pour permettre la pose automatique de tout type de rivets, tels que des rivets à tirer, et/ou des rivets frappés, et/ou des rivets écrasés, sans sortir du cadre de l'invention. Néanmoins, il est noté que le dispositif 1 est de préférence conçu pour travailler en aveugle, avec des rivets à tirer.

La partie du dispositif 1 représentée sur les figures 1 et 2 ne concerne qu'une portion terminale de ce dispositif, et constitue de préférence un outil montable/démontable destiné à être assemblé à l'extrémité d'un bras robotisé (non représenté) faisant préférentiellement partie intégrante de ce dispositif. Pour des raisons de clarté, la description du dispositif 1 va être effectuée en référence à un système d'axes de ce dispositif, qui est spécifiquement attaché à un châssis 2 de ce dernier, également appelé châssis de l'outil. Ainsi, on appelle X la direction longitudinale du dispositif, Y la direction orientée transversalement par rapport à ce dispositif, et Z la direction verticale ou de la hauteur, ces trois directions étant orthogonales entre elles. Naturellement, il doit être compris que le système d'axes précité se déplace selon un même mouvement que celui du châssis 2, piloté par le bras robotisé.

Le dispositif 1 comporte donc globalement, attachés au châssis 2, trois systèmes destinés à assurer des fonctions différents, à savoir un système de perçage 4, un système de rivetage 6, ainsi qu'un système de presse-tôles 8. A titre informatif, il est indiqué que ces systèmes sont également dénommés actionneurs.

En ce qui concerne le système de perçage 4, ce dernier dispose d'un premier chariot 10 supportant l'ensemble de la broche de perçage 12, qui présente au niveau de sa partie avant une tête de perçage 14 équipée d'un outil de perçage 17 et définissant un axe de tête de perçage 16, également dit axe d'outil de perçage, selon lequel est agencé ce même outil. Plus précisément, la broche 12 est montée fixement sur le chariot 10, de sorte que la position relative entre l'axe de tête de perçage 16 orienté selon la direction X, et ce même chariot 10, est destinée à rester identique tout au long d'un cycle d'assemblage par rivetage. A titre indicatif, la tête de perçage 14 comporte classiquement l'outil de perçage 17, ainsi que le support de cet outil, du type mandrin ou similaire.

Le premier chariot 10 est monté sur le châssis 2 de manière à pouvoir coulisser de façon rectiligne par rapport à celui-ci, selon une direction de coulissement 18 parallèle à la direction X. Pour ce faire, le chariot 10 est monté coulissant sur deux rails de guidage 20 orientés selon la direction X, ces deux rails 20 étant espacés l'un de l'autre dans la direction Y.

Pour permettre l'arrimage sur les rails 20, le chariot 10 est équipé d'une pluralité de patins à billes 22 en forme d'étrier, par exemple prévus au nombre de quatre, avec deux d'entre eux associés à l'un des rails 20, et les deux restants associés à l'autre de ces rails.

Pour permettre le déplacement dans la direction de coulissement 18 du premier chariot 10 par rapport au châssis 2, le système de perçage 4 intègre des moyens de mise en mouvement 24 qui prennent de préférence la forme d'un moteur linéaire intégrant un élément primaire mobile 26 embarqué sur le premier chariot 10, ainsi qu'un élément secondaire fixe 28 monté sur le châssis 2.

Comme cela est clairement visible sur les figures 1 et 2, le châssis 2 dispose en coupe selon un plan YZ d'une forme générale de U, aux deux extrémités duquel sont fixés les deux rails 20. Entre les deux branches de ce U, il est prévu une piste magnétique constituée d'aimants permanents en terre rare, alternant tout au long de cette même piste les polarisations Nord et Sud. Cette piste, placée sous le premier chariot 10, constitue alors l'élément secondaire fixe 28 du moteur linéaire 24.

Ainsi, l'activation du solénoïde équipant l'élément primaire mobile 26 du moteur linéaire 24 permet de créer des forces électromagnétiques assurant d'une part le déplacement selon la direction X du premier chariot 10 sur les rails 20, et d'autre part une attraction selon la direction Z de ce même chariot 10 vers l'élément secondaire fixe 28.

Afin d'obtenir une précision micrométrique dans le déplacement du chariot 10, on prévoit que ce dernier est équipé d'une tête de lecture 30 coopérant avec une règle optique 32 placée sur le châssis 2, selon la direction X. De préférence, cette règle 32 est constituée d'un barreau de verre portant des graduations de très hautes précisions. Ainsi, la tête de lecture 30 convertit en signaux électroniques la détection des gravures lues sur la règle 32 lors du passage du chariot 10, pour en donner sa position exacte sur les rails de guidage 20.

Toujours en référence aux figures 1 et 2, le système de rivetage 6 comporte quant à lui un second chariot 34 supportant l'ensemble de l'outil de rivetage 36 ou riveteuse, qui comprend dans sa partie avant une tête de rivetage 38, définissant quant à elle un axe de tête de rivetage 40 parallèle aux directions X et 18. Plus précisément, la tête de rivetage 38, et plus généralement l'ensemble de l'outil de rivetage 36, est monté solidairement à l'avant d'un bras de déportation 42 s'étendant globalement selon la direction X, et dont la partie arrière est raccordée mécaniquement au chariot 34.

Le raccordement mécanique précité est réalisé à l'aide de moyens de mise en mouvement (cachés sur les figures) conçus pour pouvoir mettre le bras 42 et la tête 38 lui étant solidarisée en rotation par rapport au chariot 34 autour d'un axe de rotation 44, dans le but de déplacer cette même tête de rivetage 38 entre une position de repos dans laquelle l'axe de tête de perçage 16 et l'axe de tête de rivetage 40 sont distincts et parallèles comme montré sur la figure 1, et une position de travail dans laquelle ces axes 16, 40 sont confondus. Les moyens de mise en mouvement prennent alors préférentiellement la forme d'un moteur rotatif classique, dont l'axe de rotation 44 est préférentiellement parallèle aux directions X et 18, et naturellement distinct des axes de tête de perçage et de tête de rivetage 16, 40. De ce fait, la mise en marche du moteur rotatif entraîne un mouvement de la tête 38 par rapport au chariot 34, ce mouvement décrivant une trajectoire correspondant à une portion de cercle située dans un plan YZ.

Le second chariot 34 est monté sur le châssis 2 de manière à pouvoir coulisser de façon rectiligne par rapport à celui-ci selon la direction de coulissement 18. Pour ce faire, le second chariot 34 est monté coulissant sur un rail de guidage 46 de préférence distinct des deux rails de guidage 20 du chariot 10, mais également orienté selon les directions X et 18.

Pour permettre l'arrimage sur le rail 46, le chariot 34 est équipé d'un ou d'une pluralité de patins à billes 48 en forme d'étrier, par exemple prévus au nombre deux, espacés selon la direction X.

De préférence, le chariot 34 du système de rivetage 6 ne comporte par de moyens de mise en translation qui lui sont propres, mais est prévu pour pouvoir s'accoupler avec le chariot du système de perçage 4, et est par conséquent susceptible d'être mis en mouvement selon la direction 18 sous l'effet de la mise en marche du premier moteur linéaire 24 décrit précédemment.

En effet, il est prévu des moyens d'accouplement 50 permettant, lorsqu'ils sont dans un état activé, de coupler en translation selon la direction 18, l'un à l'autre des chariots 10, 34, et, lorsqu'ils sont dans un état désactivé, d'autoriser un coulissement relatif entre ces mêmes chariots.

En ce qui concerne le système de presse-tôles 8, ce dernier dispose d'un troisième chariot 60 supportant une tête de presse-tôles 62, également dénommée canon de mise en pression, et qui définit un axe de tête de presse-tôles 64 orienté selon les directions X et 18. De manière connue de l'homme du métier, la tête 62, destinée à contacter les tôles à assembler durant les opérations de perçage et de rivetage, est pourvue d'un orifice traversant 66 agencé selon l'axe de tête de presse-tôles 64 et destiné à être alternativement traversé par l'outil de perçage 17, et la tête de rivetage 38. Plus précisément, cette tête 62 ou canon est montée fixement sur le chariot 60, de sorte que la position relative entre l'axe de tête de presse-tôles orienté selon la direction X, et ce même chariot 60, est destinée à rester identique tout au long d'un cycle d'assemblage par rivetage. De plus, les axes 64 et 16 sont en permanence confondus durant un cycle d'assemblage par rivetage.

Le troisième chariot 60 est monté sur le châssis 2 de manière à pouvoir coulisser de façon rectiligne par rapport à celui-ci selon la direction de coulissement 18. Pour ce faire, le chariot 60 est monté coulissant sur les deux rails de guidage 20, en avant par rapport au premier chariot 10 du système de perçage, étant naturellement entendu que l'avant et l'arrière sont ici déterminés en fonction de l'orientation de l'outil de perçage 17 employé par le système 4.

Pour permettre l'arrimage sur les rails 20, le chariot 60 est équipé d'une pluralité de patins à billes 68 en forme d'étrier, par exemple prévus au nombre de deux, chacun associé à l'un des deux rails. Pour permettre le déplacement dans la direction de coulissement 18 du troisième chariot 60 par rapport au châssis 2, le système de presse-tôles 8 intègre des moyens de mise en mouvement 70 qui prennent de préférence la forme d'un moteur linéaire intégrant un élément primaire mobile 72 embarqué sur le troisième chariot 60, ainsi qu'un élément secondaire fixe 28 monté sur le châssis 2, et qui est de préférence le même que celui utilisé pour le premier moteur linéaire, dans le but de limiter au maximum le nombre de composants cinématiques nécessaires au fonctionnement du dispositif 1.

Ainsi, ici aussi, l'activation du solénoïde équipant l'élément primaire mobile 72 du moteur linéaire 70 permet de créer des forces électromagnétiques assurant d'une part le déplacement selon la direction X du troisième chariot 60 sur les rails 20, et d'autre part une attraction selon la direction Z de ce même chariot 60 vers l'élément secondaire fixe 28 du type piste d'aimants permanents.

Pour obtenir également une précision micrométrique dans le déplacement du chariot 60, on prévoit que ce dernier est équipé d'une tête de lecture 74 coopérant avec la règle optique 32 précitée, placée sur le châssis 2. De ce fait, il est donc possible de contrôler parfaitement l'écartement relatif des deux chariots 10 et 60, ce qui présente l'avantage d'avoir une grande maîtrise de la profondeur des trous et des fraisures réalisées à l'aide de l'outil de perçage.

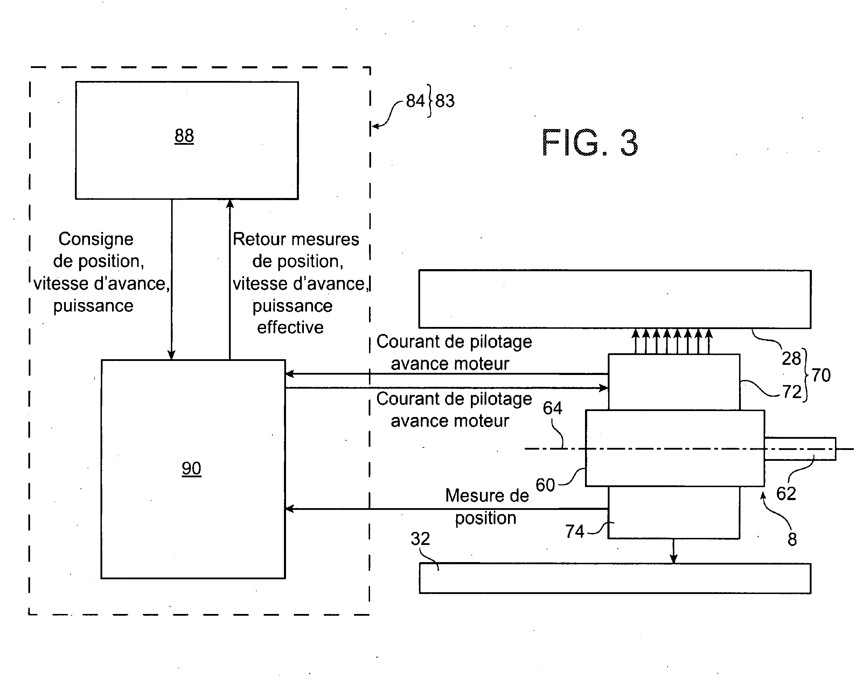

Pour pouvoir piloter ce dispositif 1 de la façon désirée, celui-ci est également équipé d'un système de commande 83 montré schématiquement sur les figures 3 à 5. Globalement, ce système 83 comprend des premiers moyens de commande 84 qui sont associés au système de presse-tôles 8, ainsi que des seconds moyens de commande 86 qui sont associés au système de perçage 4, ces moyens 84, 86 pouvant naturellement être regroupées au sein d'un même équipement.

En ce qui concerne les premiers moyens 84 montrés sur la figure 3, ceux-ci comportent une première unité de commande numérique 88 raccordée à une carte d'asservissement 90 du moteur linéaire 70 du système de presse-tôles 8. L'unité 88 est ainsi capable de délivrer des consignes de position, de vitesse d'avance et de puissance à la carte 90, qui réalise alors un asservissement en position, vitesse d'avance et puissance, en délivrant un courant approprié au moteur 70 auquel cette carte 90 est raccordée.

En retour, la carte d'asservissement 90 reçoit de la tête de lecture 74 une information sur la position réelle du chariot 60, cette information étant restituée à l'unité 88. Par ailleurs, cette carte d'asservissement 90 est également capable de restituer à l'unité 88 des mesures concernant la vitesse d'avance du chariot 60 et la puissance effective, cette puissance effective permettant à l'unité 88 de déterminer la puissance moteur absorbée par le système 8 durant les opérations d'accostage et de clamage.

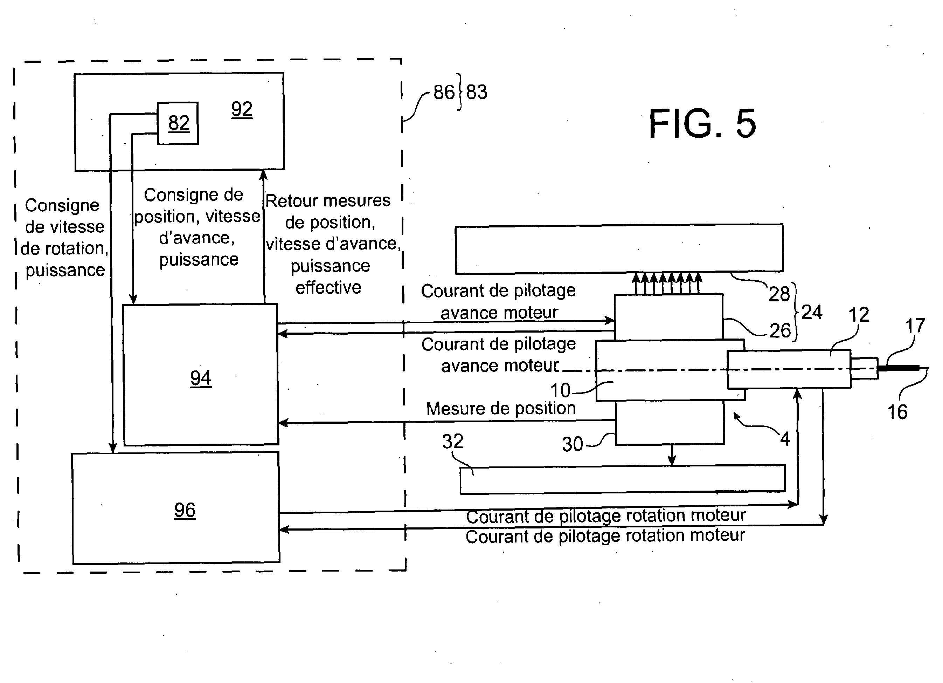

En ce qui concerne les seconds moyens 86 montrés sur la figure 5, ceux-ci comportent une seconde unité de commande numérique 92 raccordée à une carte d'asservissement 94 du moteur linéaire 24 du système de perçage 4. L'unité 92 est ainsi capable de délivrer des consignes de position, de vitesse d'avance et de puissance à la carte 94, qui réalise alors un asservissement en position, vitesse d'avance et puissance, en délivrant un courant approprié au moteur 24 auquel cette carte 94 est raccordée. En retour, la carte d'asservissement 94 reçoit de la tête de lecture 30 une information sur la position réelle du chariot 10, cette information étant restituée à l'unité 92. Par ailleurs, cette carte d'asservissement 94 est également capable de restituer à l'unité 92 des mesures concernant la vitesse d'avance du chariot 10 et éventuellement la puissance effective.

En outre, l'unité de commande numérique 92 est également raccordée à une carte d'asservissement 96 du moteur rotatif de la broche 12. L'unité 92 est ainsi capable de délivrer des consignes de vitesse de rotation et de puissance à la carte 96, qui réalise alors un asservissement en vitesse de rotation et en puissance, en délivrant un courant approprié au moteur rotatif auquel cette carte 96 est raccordée. En retour, on peut prévoir que cette carte d'asservissement 96 restitue à l'unité 92 des mesures concernant la vitesse de rotation de l'outil 17 et la puissance effective.

A cet égard, il est indiqué que l'une des particularités de l'invention réside dans le fait que l'unité 92 comprend des moyens 82 permettant de délivrer, respectivement aux cartes 94 et 96, des consigne de vitesse d'avance de l'outil et consigne de vitesse de rotation de cet outil qui sont fonction d'une information sur la raideur locale des tôles au niveau du trou à percer destiné à recevoir un rivet, cette information étant dénommée Info_raideur.

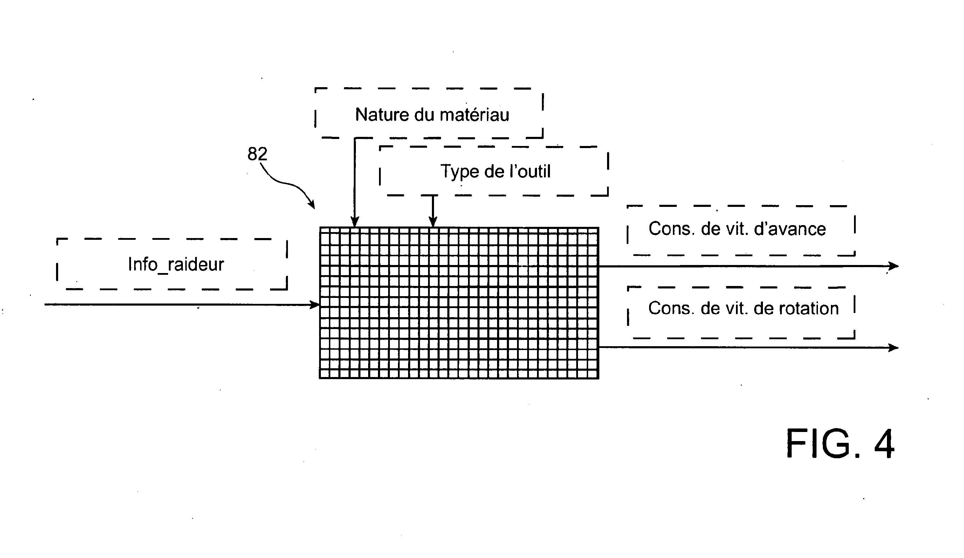

Plus spécifiquement en référence à la figure 4, on peut voir que ces moyens 82 prennent par exemple la forme d'une matrice de correction des deux consignes précitées, cette matrice prenant donc non seulement en compte l'information Info_raideur déterminée antérieurement, mais également éventuellement la nature du matériau et le type de l'outil de perçage dont les données sont préenregistrées dans un programme spécifique. Bien entendu, cette matrice de correction est conçue pour que les consignes de vitesse d'avance et de rotation qu'elle délivre aux cartes 94, 96 permettent d'effectuer un perçage avec une qualité et une précision aussi élevées que possible.

Il va à présent être décrit le procédé d'assemblage par rivetage mis en oeuvre à l'aide du dispositif 1 présenté ci-dessus, ce procédé comportant globalement une étape de détermination d'une information sur la raideur locale des tôles au niveau du trou à percer, suivie d'une étape de perçage visant à réaliser le trou ainsi que la fraisure lui étant associée, puis enfin une étape de mise en place d'un rivet dans ledit trou percé, ces trois étapes étant réitérées autant de fois qu'il y a de rivets à poser sur les tôles à assembler.

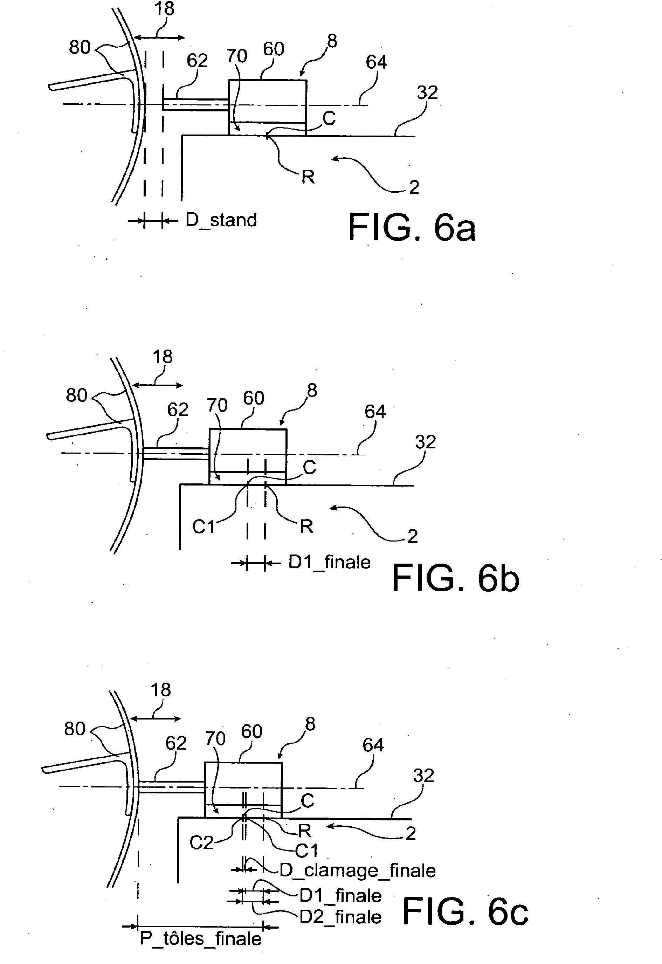

En référence aux figures 6a à 6c, on peut apercevoir une partie du dispositif 1 à différents stades lors de la mise en oeuvre de l'étape de détermination de l'information Info_raideur, cette étape de détermination s'effectuant essentiellement durant des opérations d'accostage et de clamage réalisées avec le système de presse-tôles 8, comme cela va être décrit ci-dessous.

En référence à la figure 6a, on peut voir que le châssis 2 est tout d'abord amené par le bras robotisé à proximité des tôles 80 à assembler, pour que l'extrémité avant de la tête de presse-tôles 62 se situe à une distance standard D_stand des tôles 80 selon la direction de coulissement 18 et celle de l'axe 64, cette distance pouvant être de l'ordre de 15 mm. A ce stade, le chariot 60 se trouve dans une position telle que son point central C se situe au niveau d'un point de repère R de la règle optique 32.

Ensuite, l'opération d'accostage est initiée en commandant un déplacement linéaire du chariot 60 avec l'unité 88, afin d'obtenir un contact entre la tête 62 et les tôles 80. Il est noté que dès l'établissement du contact précité, l'unité de commande 88 détermine périodiquement la valeur de la puissance moteur absorbée P1_absorbée par le système 8, cette valeur P1_absorbée étant ensuite convertie par un convertisseur intégré à l'unité 88 afin d'obtenir une valeur de la force de résistance des tôles à l'accostage F1. A titre indicatif, il est noté que cette force F1, réactualisée toutes les 5 ms, correspond également en valeur à un effort d'enfoncement du système de presse-tôles 8 contre les tôles 80.

La commande de cette opération d'accostage est prévue pour que le déplacement du système 8, et plus spécifiquement celui de son chariot 60, s'achève lorsque la force F1 déterminée a atteint une valeur cible F1_cible, qui peut par exemple être fixée à une faible valeur de l'ordre de 1 N. Comme le montre la figure 6b, en fin d'opération d'accostage, le chariot 60 a donc parcouru une distance D1_finale entre le point R et un point C1 de la règle 32 au niveau duquel se trouve le point C du chariot 60, la valeur de cette distance D1_finale mesurée à l'aide de la règle 32 étant restituée à l'unité 88. De plus, à cet instant, on connaît et on enregistre par l'intermédiaire de l'unité 88 la valeur de la force de résistance des tôles en fin d'accostage, dénommée F1_finale, qui est naturellement sensiblement identique à la force F1_cible.

Par ailleurs, on peut également réaliser une détection d'erreur à l'aide de la valeur de la distance D1_finale enregistrée. En effet, si cette valeur ne se situe pas dans une plage prédéterminée, on peut alors conclure que le dispositif est mal positionné par rapport aux tôles, ou bien alors que ces tôles comportent une forme hors tolérance.

Ensuite, on initie l'opération de clamage, qui est débutée dès la fin de l'opération d'accostage, avec éventuellement un temps d'arrêt entre ces deux opérations. De manière identique à celle rencontrée dans le cadre de l'opération précédente, le clamage s'effectue en commandant un déplacement linéaire du chariot 60 avec l'unité 88, afin d'obtenir une adhérence renforcée entre la tête 62 et les tôles 80 en contact. Il est noté que durant cette opération, l'unité de commande 88 détermine périodiquement d'une part la valeur de la puissance moteur absorbée P2_absorbée par le système 8, cette valeur P2_absorbée étant ensuite convertie par le convertisseur afin d'obtenir une valeur de la force de résistance des tôles au clamage F2, et d'autre part la distance de clamage D_clamage correspondant à la distance réelle parcourue par le point C du chariot entre le point de la règle optique 32 au niveau duquel il se situe à l'instant t considéré, et le point C1 de cette règle. Ici encore, il est précisé que la force F2, réactualisée toutes les 5 ms tout comme la valeur D_clamage, correspond également en valeur à un effort d'enfoncement du système de presse-tôles 8 contre les tôles 80.

La commande de cette opération de clamage est prévue pour que le déplacement du chariot 60 s'achève lorsque la force. F2 déterminée a atteint une valeur cible F2_cible, ou lorsque la distance de clamage D_clamage a atteint une valeur cible D_clamage_cible, l'opération de clamage étant donc achevée dès lors que l'une quelconque de ces deux valeurs cibles a été atteinte.

A titre indicatif, là valeur cible F2_cible peut par exemple être fixée à une valeur de l'ordre de 150 N, et la valeur cible D_clamage_cible peut par exemple être fixée à une valeur de l'ordre de 500 μm. Comme le montre la figure 6c, en fin d'opération de clamage, le chariot 60 a donc parcouru une distance D2_finale entre le point R et un point C2 de la règle 32 au niveau duquel se trouve le point C du chariot 60, la valeur de cette distance D2_finale mesurée à l'aide de la règle 32 étant restituée à l'unité 88. Cela permet alors d'obtenir la distance de clamage finale D_clamage_finale réellement parcourue par le système 8, en soustrayant D1_finale à D2_finale. En outre, la connaissance d'une part des dimensions du système 8 et d'autre part de la position réelle de ce dernier sur le châssis 2 en fin d'opération de clamage permet de déterminer la position exacte des tôles contraintes 80 par rapport au châssis 2. A cet égard, l'unité 88 peut alors déterminer puis stocker la distance T_tôles_finale correspondant à la distance selon la direction 18 entre le point R de la règle 32 et l'extrémité avant de la tête de presse-tôles 62 en fin d'opération de clamage.

Cette spécificité est avantageuse puisqu'elle permet d'optimiser au mieux le déplacement linéaire du système de perçage 4 durant l'étape ultérieure de perçage, dans la mesure où ce système 4 peut être piloté à grande vitesse sur une distance précise fixée en fonction de la distance T_tôles_finale, avant d'être ralenti à la vitesse d'avance de l'outil préalablement déterminée. Par ailleurs, la connaissance de cette distance T_tôles_finale, de l'ordre de 200 mm, permet de fixer précisément la distance de changement de vitesse de rotation de l'outil de perçage pour l'attaque du fraisurage, lorsqu'un outil étagé foreur-fraisureur est utilisé. Enfin, un autre avantage réside dans le fait que la profondeur de la fraisure peut être parfaitement respectée. A ce titre, il est indiqué que la course de fraisage ultérieure peut aussi être corrigée en fonction de l'information Info_raideur déterminée comme décrit ci-après, et également éventuellement en fonction des diverses caractéristiques des rivets employés. A cet égard, il est noté que plus la raideur locale des tôles est faible, plus ces dernières sont déformées par la poussée de la tête de presse-tôles, et donc plus le centre de cette tête de presse-tôles est éloigné de ces mêmes tôles déformées. Ainsi, plus la raideur locale des tôles est faible, plus la course de fraisage par rapport au système de presse-tôles, pour obtenir une profondeur de fraisure déterminée, devra être importante.

Par ailleurs, on peut également réaliser une détection d'erreur à l'aide de la valeur de la distance D_clamage_ finale enregistrée. En effet, si cette valeur ne se situe pas dans une plage prédéterminée, on peut alors conclure que le dispositif est mal positionné par rapport aux tôles, ou bien alors que ces tôles comportent une forme hors tolérance. De plus, à la fin de l'opération de clamage stoppée lorsque la valeur cible D_clamage_cible a été atteinte, on connaît et on enregistre par l'intermédiaire de l'unité 88 la valeur de la force de résistance des tôles en fin de clamage, dénommée F2_finale. Si cette valeur est trop faible, on peut alors considérer que la structure constituée par les tôles est inexistante.

Avec la valeur de la force de résistance des tôles en fin de clamage F2_finale, il est alors possible de déterminer, toujours à l'aide de l'unité 88, l'information Info_raideur en établissant le rapport suivant :

$$\text{Info\_raideur} = (\text{F2\_finale} - \text{F1\_finale}) / \text{D\_clamage\_finale}$$

Cette information sur la raideur locale des tôles, dont la valeur est par exemple de l'ordre de 30 kg/mm, est ensuite délivrée aux seconds moyens de commande 86 associés au système de perçage 4, et plus particulièrement à la matrice de correction 82 équipant l'unité 92. Comme indiqué précédemment, cette information Info_raideur est prévue pour prédisposer les consignes de vitesse d'avance et de vitesse de rotation de l'outil 17 utilisées lors de la commande de l'étape de perçage.

Ensuite, il est effectivement entrepris l'étape de perçage, qui consiste à mettre en mouvement le chariot 10 du système de perçage 4, de manière à ce que celui-ci traverse le système de presse-tôles 8, et traverse également les deux tôles 80 à assembler de façon à obtenir le trou et la fraisure désirés.

Le perçage s'effectue donc en commandant le déplacement linéaire du chariot 10 avec la consigne de vitesse d'avance de l'outil telle que préalablement déterminée et issue de la matrice 82, et en commandant simultanément la rotation de la broche 12 avec la consigne de vitesse de rotation de l'outil provenant également de cette matrice 82, ces consignes étant respectivement délivrées aux cartes d'asservissement 94 et 96.

Durant cette étape de perçage, on détermine périodiquement la valeur d'une force de résistance des tôles F3 résultant de l'appui du système de presse-tôles 8 sur les tôles 80. Cette détermination de F3 est préférentiellement réalisée de la même manière que celle adoptée pour la détermination de F1 et F2. A ce titre, il est indiqué que le moteur associé au chariot 60 du système de presse-tôles continue à être alimenté pendant le perçage, et qu'il est asservi en position de sorte que le chariot 60 conserve sa position en C2 sur le châssis 2.

A titre indicatif, F3 est réactualisée toutes les 5 ms et correspond en valeur à un effort d'enfoncement de la tête de presse-tôles 62 dans les tôles 80, au cours du perçage.

Cela permet alors de comparer périodiquement durant le perçage, à l'aide de l'unité 92, la valeur de cette force F3 à une valeur minimale F3_min, la valeur minimale F3_min pouvant par exemple être fixée à 5 N.

Lorsqu'il est détecté que F3 est inférieure à F3_min, il est alors ordonné une diminution de la consigne de vitesse d'avance de l'outil de perçage via la matrice 82, de manière à ce que la valeur de la force F3 repasse au-dessus de la valeur minimale F3_min. Ainsi, cette façon d'opérer permet avantageusement de faire en sorte que la tête de presse-tôles 62 ne perde pas le contact avec les tôles 80 durant l'opération de perçage, suite à une poussée trop importante de l'outil de perçage 17 sur ces tôles.

Enfin, une fois l'étape de perçage achevée, l'étape de mise en place du rivet peut être débutée en mettant en mouvement le système de rivetage 6 de la manière appropriée.

Bien entendu, diverses modifications peuvent être apportées par l'homme du métier à l'invention qui vient d'être décrite, uniquement à titre d'exemple non limitatif.

**Revendications**

1. Procédé d'assemblage par rivetage de tôles (80) comprenant une étape de perçage d'un trou à travers lesdites tôles (80) suivie d'une étape de mise en place d'un rivet dans le trou percé, l'étape de perçage d'un trou étant réalisée en délivrant une consigne de vitesse d'avance d'un outil de perçage (17) ainsi qu'une consigne de vitesse de rotation de cet outil (17),
   **caractérisé en ce qu'**il est de plus mis en oeuvre une étape préalable de détermination d'une information sur la raideur locale des tôles (Info_raideur) au niveau dudit trou à percer, lesdites consigne de vitesse d'avance et consigne de vitesse de rotation de l'outil (17) étant fonction de ladite information sur la raideur locale des tôles (Info_raideur), et **en ce que** ladite étape de détermination d'une information sur la raideur locale des tôles (Info-raideur) au niveau du trou à percer s'effectue en réalisant une opération de clamage visant à enfoncer un système de presse-tôles (8) dans les tôles (80) au niveau dudit trou à percer, le système de presse-tôles (8) étant destiné à être traversé par l'outil de perçage (17) durant l'opération ultérieure de perçage.

2. Procédé d'assemblage selon la revendication 1, **caractérisé en ce que** ladite étape de détermination d'une information sur la raideur locale des tôles (Info_raideur) au niveau dudit trou à percer s'effectue en réalisant une opération de clamage visant à enfoncer ledit système de presse-tôles (8) dans les tôles (80) au niveau dudit trou à percer sur une distance de clamage (D_clamage) atteignant une valeur finale (D_clamage_finale) en fin d'opération de clamage, opération durant laquelle on détermine périodiquement la valeur d'une force de résistance des tôles au clamage (F2) résultant de l'enfoncement du système de presse-tôles (8) dans les tôles (80), afin de déterminer une valeur de force de résistance des tôles en fin de clamage (F2_finale), à la fin de ladite opération de clamage.

3. Procédé d'assemblage selon la revendication 2, **caractérisé en ce que** la détermination de la valeur de la force de résistance des tôles au clamage (F2) s'effectue en déterminant la valeur de la puissance moteur absorbée (P2_absorbée) par le système de presse-tôles (8) s'enfonçant dans les tôles (80), cette' valeur de la puissance moteur absorbée (P2_absorbée) étant ensuite convertie par un convertisseur afin d'obtenir ladite valeur de la force de résistance des tôles au clamage (F2).

4. Procédé d'assemblage selon la revendication 2 ou la revendication 3, **caractérisé en ce que** ladite opération de clamage est achevée lorsque la force de résistance des tôles au clamage (F2) déterminée a atteint une valeur cible (F2_cible) ou lorsque la distance de clamage (D_clamage) a atteint une valeur cible (D_clamage_cible).

5. Procédé d'assemblage selon l'une quelconque des revendications 2 à 4, **caractérisé en ce que** ladite étape de détermination d'une information sur la raideur locale des tôles (Info_raideur) au niveau dudit trou à percer s'effectue en réalisant en outre, antérieurement à la mise en oeuvre de ladite opération de clamage, une opération d'accostage du système de presse-tôles (8) sur les tôles (80) au niveau dudit trou à percer, opération durant laquelle on détermine périodiquement la valeur d'une force de résistance des tôles à l'accostage (F1) résultant de l'enfoncement du système de presse-tôles (8) dans les tôles (80), afin de déterminer une valeur de force de résistance des tôles en fin d'accostage (F1_finale), à la fin de ladite opération d'accostage.

**6.** Procédé d'assemblage selon la revendication 5, **caractérisé en ce que** ladite opération de clamage est débutée avec le système de presse-tôles (8) se trouvant dans une position telle qu'occupée en fin d'opération d'accostage.

**7.** Procédé d'assemblage selon la revendication 5 ou la revendication 6, **caractérisé en ce que** l'information sur la raideur locale des tôles (Info_raideur) est obtenue en faisant le rapport entre d'une part la différence entre la valeur de la force de résistance des tôles en fin de clamage (F2_finale) et la valeur de la force de résistance des tôles en fin d'accostage (F1_finale), et d'autre part la distance de clamage (D_clamage_finale).

**8.** Procédé d'assemblage selon l'une quelconque des revendications précédentes, **caractérisé en ce que** lesdites consigne de vitesse d'avance et consigne de vitesse de rotation de l'outil (17) sont également fonction de la nature du matériau des tôles (80) à assembler, et du type d'outil de perçage (17) employé.

**9.** Procédé d'assemblage selon l'une quelconque des revendications précédentes, **caractérisé en ce que** durant l'étape de perçage du trou, on détermine périodiquement la valeur d'une force de résistance des tôles (F3) résultant de l'appui du système de presse-tôles (8) sur les tôles (80), et on compare cette dernière à une valeur minimale (F3_min), de manière à ordonner une diminution de la consigne de vitesse d'avance de l'outil de perçage (17) lorsque l'on détecte que la valeur de cette force de résistance des tôles (F3) est inférieure à ladite valeur minimale (F3_min).

**Claims**

**1.** A method for assembling sheets by riveting (80) comprising a step for piercing a hole through said sheets (80) followed by a step for placing a rivet in the pierced hole, the step for piercing a hole being made by providing an advance speed instruction of a piercing tool (17) as well as a rotation speed instruction of this tool (17), **characterised in that** a previous step for determining information on the local stiffness of the sheets (Info_stiffness) at the level of said hole to be pierced is also carried out, said advance speed instruction and rotation speed instruction of the tool being a function of said information on the local stiffness of the sheets (Info_stiffness), and **in that** said step for determining information on the local stiffness of the sheets (Info_stiffness at the level of said hole to be pierced is performed by carrying out a clamping operation aimed at sinking a sheet press system (8) into the sheets (80) at the level of said hole to be pierced, the sheet press system (8) being intended to have the piercing tool (17) pass through it during the subsequent piercing operation.

**2.** The assembly method according to claim 1, **characterised in that** said step for determining information on the local stiffness of the sheets (Info_stiffness) at the level of said hole to be pierced is performed by carrying out a clamping operation aimed at sinking a sheet press system (8) into the sheets (80) at the level of said hole to be pierced over a clamping distance (D_clamping) reaching a final value (D_clamping final) on completion of the clamping operation, an operation during which the value of a resistance force of the sheets to the clamping (F2) resulting from sinking the sheet press system (8) into the sheets (80) is determined periodically to determine a resistance force value of the sheets on completion of clamping (F2_final), at the end of said clamping operation.

**3.** The assembly method according to claim 2, **characterised in that** determination of the value of the resistance force of the sheets to the clamping (F2) is performed by determining the value of the motor power (P2_absorbed) absorbed by the sheet press system (8) sinking into the sheets (80), this value of the absorbed motor power (P2_absorbed) then being converted by a converter to produce said value of the resistance force of the sheets to the clamping (F2).

**4.** The assembly method according to claim 3 or claim 3, **characterised in that** said clamping operation is completed when the resistance force of the sheets to the determined clamping (F2) has reached a target value (F2_target) or when the clamping distance (D_clamping) has reached a target value (D_clamping_target).

**5.** The assembly method according to any one of claims 2 to 4, **characterised in that** said step for determining information on the local stiffness of the sheets (Info_stiffness) at the level of said hole to be pierced is performed, prior to executing said clamping operation, by also carrying out a docking operation of the sheet press system (8) on the sheets (80) at the level of said hole to be pierced, an operation during which the value of a resistance force of the sheets to the docking (F1) resulting from sinking the sheet press system (8) into the sheets (80) is determined periodically to determine a resistance force value of the sheets on completion of the docking (F1_final), at the end of said docking operation.

6. The assembly method according to claim 5, **characterised in that** said clamping operation is started with the sheet press system (8) located in a position such as occupied on completion of the docking operation .

7. The assembly method according to claim 5 or claim 6, **characterised in that** the information on the local stiffness of the sheets (Info_stiffness) is obtained by making the ratio between on the one hand the difference between the value of the resistance force of the sheets on completion of clamping (F2_final) and the value of the resistance force of the sheets on completion of docking (F1_final), and on the other hand the clamping distance (D_clamping_final).

8. The assembly method according to any one of the preceding claims, **characterised in that** said advance speed instruction and rotation speed instruction of the tool (17) are also a function of the nature of the material of the sheets (80) to be assembled, and of the type of piercing tool (17) employed.

9. The assembly method according to any one of claims 2 to 8, **characterised in that** during the piercing step of the hole the value of a resistance force of the sheets (F3) resulting from the support of the sheet press system (8) on the sheets (80) is determined periodically, and the latter is compared to a minimal value (F3_min) so as to order a decrease in the advance speed instruction of the piercing tool (17) when it is detected that the value of this resistance force of the sheets (F3) is less than said minimal value (F3_min).

**Patentansprüche**

1. Verfahren zum Zusammenfügen mittels Vernietung von Platten (80), umfassend einen Schritt des Bohrens eines Lochs durch die Platten (80) hindurch, gefolgt von einem Schritt des Platzierens eines Niets in dem gebohrten Loch, wobei der Schritt des Bohrens eines Lochs durchgeführt wird unter Lieferung einer Einstellgröße einer Vorschubgeschwindigkeit eines Bohrwerkzeugs (17) sowie einer Einstellgröße einer Drehzahl dieses Werkzeugs (17), **dadurch gekennzeichnet, dass** ferner ein vorheriger Schritt der Bestimmung einer Information über die lokale Steifigkeit der Platten (info_raideur) im Bereich des zu bohrenden Lochs ausgeführt wird, wobei die Einstellgröße der Vorschubgeschwindigkeit und die Einstellgröße der Drehzahl des Werkzeugs (17) eine Funktion der Information über die lokale Steifigkeit der Platten (Info_raideur) sind, und dass der Schritt der Bestimmung einer Information über die lokale Steifigkeit der Platten (Info_raideur) im Bereich des zu bohrenden Lochs durchgeführt wird unter Ausführung einer Klemmoperation, die darauf abzielt, ein Plattenpreßsystem (8) im Bereich des zu bohrenden Lochs in die Platten (80) einzutreiben, wobei das Plattenpreßsystem (8) dazu ausgelegt ist, während der späteren Bohroperation von dem Bohrwerkzeug durchsetzt zu werden.

2. Verfahren zum Zusammenfügen nach Anspruch 1, **dadurch gekennzeichnet, dass** der Schritt der Bestimmung einer Information über die lokale Steifigkeit der Platten (Info_raideur) im Bereich des zu bohrenden Lochs durchgeführt wird unter Ausführung einer Klemmoperation, die darauf abzielt, das Plattenpreßsystem (8) im Bereich des zu bohrenden Lochs über einen Klemmabstand (D_clamage) in die Platten (80) einzutreiben, der am Ende der Klemmoperation einen Endwert (D_clamage_finale) erreicht, während welcher Operation man periodisch den Wert einer Klemm-Widerstandskraft der Platten (F2) bestimmt, die aus dem Eintreiben des Plattenpreßsystems (8) in die Platten (80) resultiert, um einen Wert der Widerstandskraft der Platten am Ende des Klemmens (F2_finale) am Ende der Klemmoperation zu bestimmen.

3. Verfahren zum Zusammenfügen nach Anspruch 2, **dadurch gekennzeichnet, dass** die Bestimmung des Werts der Klemm-Widerstandskraft (F2) der Platten durchgeführt wird, indem man den Wert der Motorleistung (P2_absorbée) bestimmt, die von dem Plattenpreßsystem (8) absorbiert wird, das in die Platten (80) eingetrieben wird, wobei dieser Wert der absorbierten Motorleistung (P2_absorbée) anschließend von einem Wandler umgewandelt wird, um den Wert der Klemm-Widerstandskraft (F2) der Platten zu erhalten.

4. Verfahren zum Zusammenfügen nach Anspruch 2 oder Anspruch 3, **dadurch gekennzeichnet, dass** die Klemmoperation beendet wird, wenn die Klemm-Widerstandskraft (F2) der Platten einen Zielwert (F2_cible) erreicht hat, oder wenn der Klemmabstand (D_clamage) einen Zielwert (D_clamage_cible) erreicht hat.

5. Verfahren zum Zusammenfügen nach einem der Ansprüche 2 bis 4, **dadurch gekennzeichnet, dass** der Schritt des Bestimmens einer Information über die lokale Steifigkeit der Platten (Info_raideur) im Bereich des zu bohrenden Lochs durchgeführt wird, indem man ferner vor der Durchführung der Klemmoperation eine Operation des Ankoppelns des Plattenpreßsystems (8) an den Platten (80) im Bereich des zu bohrenden Lochs durchführt, während welcher Operation man periodisch den Wert einer Ankoppel-Widerstandskraft (F1) der Platten bestimmt, die aus dem Eintreiben des Plattenpreßsystems (8) in die Platten (80) resultiert, um einen Wert der Widerstandskraft der Platten am Ende des Ankoppelns (F1_finale) am Ende der Ankoppeloperation zu bestimmen.

6. Verfahren zum Zusammenfügen nach Anspruch 5, **dadurch gekennzeichnet, dass** die Klemmoperation begonnen wird, wenn sich das Plattenpreßsystem (8) in einer Position befindet, wie sie am Ende der Ankoppeloperation eingenommen wird.

7. Verfahren zum Zusammenfügen nach Anspruch 5 oder Anspruch 6, **dadurch gekennzeichnet, dass** die Information über die lokale Steifigkeit der Platten (Info_raideur) erhalten wird durch Bilden des Verhältnisses zwischen einerseits der Differenz zwischen dem Wert der Widerstandskraft der Platten am Ende des Klemmens (F2_finale) und dem Wert der Widerstandskraft der Platten am Ende des Ankoppelns (F1_finale), und andererseits dem Klemmabstand (D_clamage_finale).

8. Verfahren zum Zusammenfügen nach einem der vorhergehenden Anspruche, **dadurch gekennzeichnet, dass** die Einstellgröße der Vorschubgeschwindigkeit und die Einstellgröße der Drehzahl des Werkzeugs (17) ferner eine Funktion der Art des Materials der zusammenzufügenden Platten (80) und des verwendeten Typs des Bohrwerkzeugs (17) sind.

9. Verfahren zum Zusammenfügen nach einem der vorhergehenden Ansprüche, **dadurch gekennzeichnet, dass** man während des Schritts des Bohrens des Lochs periodisch den Wert einer Widerstandskraft (F3) der Platten bestimmt, die aus dem Druck des Plattenpreßsystems (8) gegen die Platten (80) resultiert, und dass man diesen letztgenannten mit einem Minimalwert (F3_min) vergleicht, um eine Verminderung der Einstellgröße der Vorschubgeschwindigkeit des Bohrwerkzeugs (17) zu veranlassen, wenn man feststellt, dass der Wert dieser Widerstandskraft der Platten (F3) kleiner ist als der Minimalwert (F3_min).

FIG. 1

# FIG. 2

FIG. 3

84 } 83

**88**

Consigne
de position,
vitesse d'avance,
puissance

Retour mesures
de position,
vitesse d'avance,
puissance
effective

**90**

Courant de pilotage
avance moteur

Courant de pilotage
avance moteur

Mesure de
position

28 } 70
72

64

60

62

74

32

8

FIG. 4

EP 1 999 525 B1

# FIG. 5

Courant de pilotage avance moteur

Courant de pilotage avance moteur

Mesure de position

Courant de pilotage rotation moteur

Courant de pilotage rotation moteur

Retour mesures de position, vitesse d'avance, puissance effective

Consigne de position, vitesse d'avance, puissance

Consigne de vitesse de rotation, puissance

FIG. 6a

FIG. 6b

FIG. 6c

**EP 1 999 525 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4745557 A